# FASCICULE DE BREVET EUROPEEN

(11) **EP 1 609 109 B1**
(45) Date de publication et mention de la délivrance du brevet: **27.02.2008**
(21) Numéro de dépôt: 04742397.5
(22) Date de dépôt: 29.03.2004
(51) Int. Cl.: G06K 7/00

(54) **APPAREIL EQUIPE DE MOYENS DE MAINTIEN CONTRE UNE SURFACE DE COMMUNICATION D'UN SUPPORT DE DONNEES SANS CONTACT**
VORRICHTUNG AUSGESTATTET MIT HALTEMITTELN ZUM HALTEN EINES KONTAKTLOSEN DATENTRÄGERS GEGEN EINE KOMMUNIKATIONSOBERFLÄCHE
DEVICE PROVIDED WITH MEANS FOR MAINTENANCE AGAINST A COMMUNICATION SURFACE OF A CONTACTLESS DATA MEDIUM

(30) Priorité: 31.03.2003 FR 0304057
(43) Date de publication de la demande: 28.12.2005
(73) Titulaire: PARKEON, 75015 Paris (FR)
(72) Inventeur: MOLE, Julien, F-39110 Salins Les Bains (FR)
(74) Mandataire: Domenego, Bertrand
(86) Numéro de dépôt international: PCT/FR2004/000796
(87) Numéro de publication internationale: WO 2004/090792

(56) Documents cités:
- US-A1- 2002 062 284

## Description

L'invention concerne un appareil comportant un boîtier dans lequel est logée une antenne intérieure qui est reliée à un dispositif de traitement de données.

L'invention concerne plus particulièrement un appareil comportant un boîtier dans lequel est logée une station de communication comportant une antenne intérieure, du type dans lequel le boîtier comporte une paroi comprenant une surface extérieure globalement verticale transversale de communication qui est agencée à proximité de l'antenne intérieure et qui est perméable aux ondes électromagnétiques, et du type dans lequel l'antenne intérieure est susceptible de communiquer à distance par voie électromagnétique avec un support de données, notamment en forme de carte, lorsqu'un utilisateur plaque le support de données contre la surface extérieure de communication.

Le document US 2002/062284 A1 décrit un appareil selon le préambule de la revendication 1.

Certains appareils, notamment des automates, sont destinés à être utilisés par des usagers munis d'un support de données spécifique. Le support de données peut par exemple être une carte à circuit intégré.

Dans les cartes à circuit intégré, au moins un circuit électronique, aussi appelé puce, est intégré dans un corps principal de la carte réalisé en matière plastique. On connaît les cartes à circuit intégré dites sans contact », aussi appelées « transpondeurs », comportant une antenne logée dans la carte support qui permet la communication du circuit intégré par voie électromagnétique avec l'appareil.

L'appareil comporte une station de communication qui est destinée à crypter ou à décrypter les données échangées par voie électromagnétiques avec le support de données. La station comporte notamment une antenne de communication avec le support de données.

La station est généralement enfermée dans un boîtier de protection. Elle comporte en effet des éléments vulnérables qui risquent d'être endommagés par des agressions extérieures.

Au moins une paroi du boîtier comporte une surface perméable aux ondes électromagnétiques afin de permettre la communication entre le support de données et la station. Cette surface sera appelée « surface de communication » dans la suite de cette description.

Il existe différentes normes qui définissent le type de carte et le type de station à utiliser en fonction de la distance de communication maximale requise entre la carte et la station. La présente invention concerne des appareils du type dans lequel le support de données communique avec la station à courte distance (quelques millimètres) et/ou à proximité (quelques centimètres). La surface de communication doit donc être située au voisinage de l'antenne intérieure.

La surface de communication est généralement intégrée à un emplacement d'accueil de la carte. L'emplacement d'accueil est généralement mis en évidence sur l'appareil de façon à signifier à un utilisateur où se trouve la surface de communication sur laquelle il doit appliquer la carte sans contact.

Selon une conception connue, les appareils utilisant ce type de carte sont équipés d'un emplacement d'accueil du type lecteur de carte. Le logement comporte une fente, généralement horizontale, dans laquelle l'utilisateur introduit la carte par une tranche afin de procéder à une transaction, par exemple un paiement.

Cependant, le contact répété de la carte avec le lecteur provoque une usure de la carte.

De plus, l'opération d'introduction de la carte dans le lecteur prend du temps. En effet, l'utilisateur range généralement sa carte dans un étui protecteur et/ou dans un portefeuille. Il lui faut donc extraire la carte de son étui puis l'introduire dans la fente du lecteur.

D'autre part, ce type d'emplacement d'accueil n'est pas adapté pour une utilisation dite « à la volée » dans laquelle l'utilisateur passe sans s'arrêter devant l'appareil en balayant la surface de communication avec la carte.

Enfin, un tel lecteur de carte est généralement situé dans un lieu public, il est donc susceptible d'être vandalisé, par exemple par l'insertion de chewing-gum dans la fente qui est alors colmatée.

On connaît aussi des appareils dont l'emplacement d'accueil est formé uniquement par la surface de communication, généralement verticale, contre laquelle l'utilisateur plaque sa carte. Grâce à ce dispositif, l'utilisateur peut utiliser la carte sans la sortir de son étui, voire sans la sortir de son portefeuille. Ce type d'emplacement d'accueil est notamment très adapté pour des passages « à la volée ».

Cependant, ce type d'appareil n'est pas adapté à une utilisation prolongée de la carte. L'utilisateur est en effet obligé de maintenir manuellement la carte plaquée contre la surface de communication durant toute la transaction.

Afin de résoudre ces problèmes, l'invention propose un appareil selon la revendication 1.

D'autres caractéristiques de l'invention sont présentes dans les revendications dépendantes.

D'autres caractéristiques et avantages de l'invention apparaîtront au cours de la lecture de la description détaillée qui suit, pour la compréhension de laquelle on se reportera aux dessins en annexe, parmi lesquels :
- la figure 1 est une vue de coté qui représente schématiquement un appareil qui est équipé d'une antenne intérieure, et qui comporte des moyens réalisés selon les enseignements de l'invention pour maintenir un support de données plaqué contre une surface de communication;
- la figure 2 est une vue en section selon le plan de coupe 2-2 qui représente la surface de communication équipée des moyens de maintien de la figure 1 ;
- la figure 3 est une vue en perspective qui représente l'appareil de la figure 1 ;
- la figure 4 est une vue similaire à celle de la figure 2 qui représente la surface de communication sur laquelle on a posé un objet plus volumineux que le support de données.

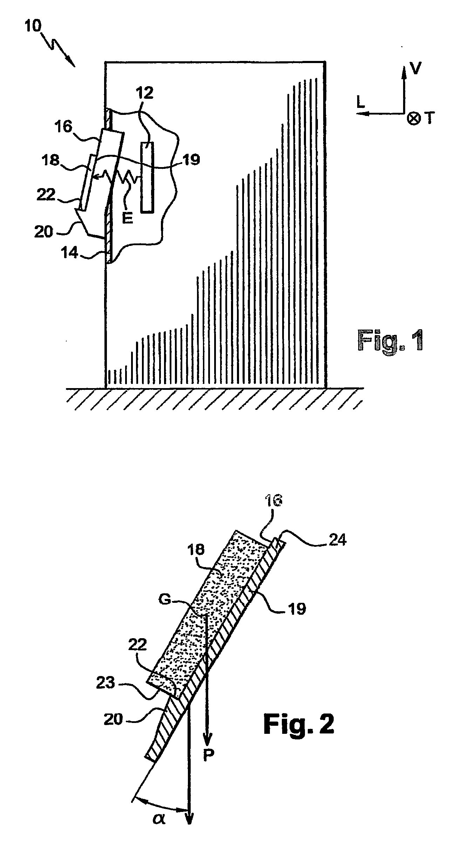

On adoptera dans la suite de la description une orientation longitudinale, verticale et transversale indiquée par le trièdre L, V, T de la figure 1.

On a représenté à la figure 1 un appareil 10 de transaction. L'appareil 10 se présente globalement sous la forme d'un boîtier à l'intérieur duquel est logée une antenne intérieure 12 d'une station de communication (non représentée).

L'appareil 10 comporte une paroi avant 14 verticale transversale. La paroi avant 14 comporte ici une surface extérieure 16 de communication qui est agencée en vis-à-vis et au voisinage de l'antenne intérieure 12. La surface de communication 16 est transversale et globalement verticale.

Un support de données 18, en forme de carte, est destiné à être plaqué par sa face arrière 19 contre la surface de communication 16 par un utilisateur. Le support de données 18 est par exemple une carte à circuit intégré qui comporte des moyens de communication à distance par voie électromagnétique avec l'antenne intérieure 12. La communication par voie électromagnétique est illustrée à la figure 1 par la flèche E.

Le support de données 18 a ici une épaisseur longitudinale sensiblement faible par rapport a sa largeur transversale et par rapport à sa hauteur verticale.

Il sera compris dans la suite de cette description que le terme « support de données » est applicable à une carte à puce, un ticket ou tout autre support de dimensions analogues. Le terme support de données 18 englobe aussi un étui contenant le support du type carte, l'étui pouvant être une pochette de dimensions similaires à celles de la carte, ou encore un portefeuille dans lequel la carte est rangée.

La surface de communication est perméable aux ondes électromagnétiques E. La surface de communication 16 est agencée à proximité de l'antenne intérieure 12 de façon qu'elle soit à portée de la zone d'influence de l'antenne intérieure 12, c'est-à-dire de façon que :
- l'antenne intérieure 12 puisse émettre des ondes électromagnétiques E jusqu'à la surface de communication 16 ; ou que
- des ondes électromagnétiques E qui sont émises par le support de données 18 plaqué contre la surface de communication 16, puissent être captées par l'antenne intérieure 12.

Selon les enseignements de l'invention, la surface de communication 16 fait partie d'un emplacement d'accueil du support de données 18 qui comporte des moyens pour maintenir la carte 18 plaquée contre la surface de communication 16 sans intervention de l'utilisateur.

La surface de communication 16 comporte un rebord 20 transversal inférieur qui s'étend longitudinalement vers l'avant. Le rebord 20 comporte une face supérieure 22 qui forme une surface inférieure de rétention destinée à retenir verticalement le support de données 18 afin de l'empêcher de glisser vers le bas. La surface de rétention 22 est globalement perpendiculaire à la surface de communication 16. La surface de rétention 22 est destinée à supporter une tranche 23 transversale inférieure du support de données 18.

La surface de rétention 22 a une largeur longitudinale maximale globalement égale à l'épaisseur du support de données 18. La largeur de la surface de rétention 22 est suffisante pour empêcher le support de données 18 de glisser vers le bas, ou de basculer vers l'avant.

Comme illustré à la figure 2, la surface de communication 16 est inclinée d'un angle a par rapport à la direction verticale de façon que le rebord inférieur 20 soit avancé longitudinalement par rapport à une extrémité supérieure 24 de la surface de communication 16. Ainsi, la face arrière 19 du support de données 18 est maintenue plaquée contre la surface de communication 16 par son poids.

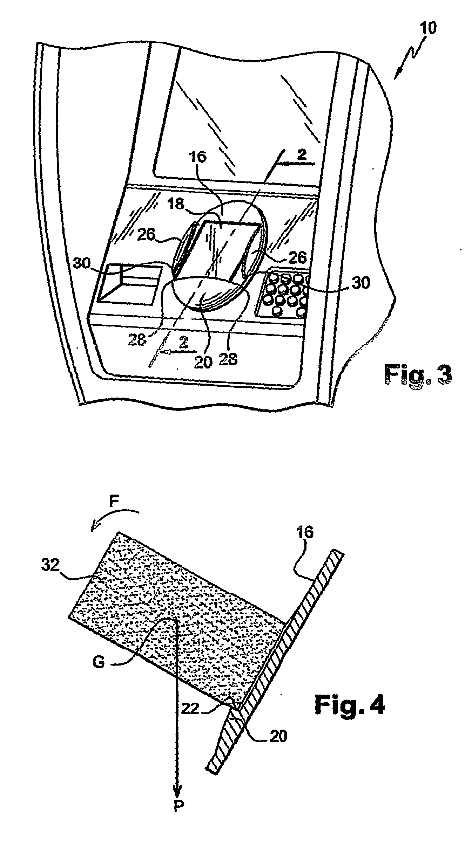

Comme illustré à la figure 3, la surface de communication 16 comporte deux montants 26 verticaux qui font saillie vers l'avant. Les montants 26 sont parallèles l'un à l'autre, et ils s'étendent vers le haut sensiblement depuis les extrémités 28 de la surface de rétention 22.

Les montants 26 et la surface de rétention 22 encadrent l'emplacement d'accueil de la surface de communication 16 qui est destiné à recevoir le support de données 18. Les montants 26 ont une épaisseur longitudinale suffisamment grande pour maintenir le support de données 18 transversalement, et suffisamment faible pour ne pas faire obstacle au support de données 18 lors d'un passage « à la volée » du support de données 18 selon une trajectoire globalement transversale.

Avantageusement, les extrémités 28 de la surface de rétention 22 et les extrémités inférieures 30 de chaque montant 26 ne sont pas jointives de façon à former des orifices d'évacuation de liquide. Ainsi, si un liquide est retenu par la surface de rétention 22, il est plus aisé de l'expulser en le balayant transversalement vers l'une des extrémités par laquelle le liquide est susceptible de s'écouler.

L'arête transversale extérieure de la surface de rétention 22 a une forme arrondie sans angles vifs de façon que le nettoyage de l'appareil soit facilité, par exemple lors du passage d'un chiffon.

Selon une variante non représentée, la surface de rétention 22 comporte une légère déclivité transversale vers l'une et/ou l'autre de ses extrémités 28 de façon que le liquide retenu s'écoule par gravité vers les extrémités 28.

Selon une autre variante non représentée, la surface de communication 16 est légèrement bombée à l'intersection avec la surface de rétention 22 de façon que le liquide retenu s'écoule par gravité vers les extrémités 28.

Selon une autre variante non représentée, la surface de rétention 22 comporte une rigole transversale située à l'intersection avec la surface de communication 16. Le liquide s'écoule ainsi dans la rigole jusqu'aux extrémités 28.

Selon une autre variante non représentée, le rebord 20 comporte des canaux sensiblement verticaux dont un orifice supérieur débouche sur la surface de rétention 22, et dont l'extrémité inférieure débouche en dehors de l'appareil.

Selon un premier mode de réalisation, la surface de communication 16 est une pièce rapportée qui est fixée à la paroi avant 14 de l'appareil 10. Les montants 26 et le rebord 20 sont réalisés venus de matière avec la surface de communication 16.

Selon un second mode de réalisation, les montants 26 et/ou le rebord inférieur 20 sont réalisés venus de matière avec la paroi avant 14, et la surface de communication 16 est une pièce rapportée.

Lors de l'utilisation de l'appareil 10, l'utilisateur pose la tranche 23 du support de données 18 sur la surface de rétention 22. Comme illustré à la figure 2, le centre de gravité G du support de données 18 est longitudinalement situé en arrière de la surface de rétention 22. Ainsi, le poids P du support de données 18 plaque sa face arrière 19 contre la surface de communication 16.

Comme représenté à la figure 4, la largeur de la surface de rétention 22 et l'angle d'inclinaison a de la surface de communication 16 sont tels qu'un objet 32 dont l'épaisseur longitudinale est sensiblement plus grande que l'épaisseur du support de donnée 18 bascule vers l'avant par rapport à la surface de rétention 22. Le centre de gravité G de l'objet 32 est en effet situé longitudinalement en avant par rapport à la surface de rétention 22. L'objet 32 est donc entraîné par son poids P en rotation selon la flèche F de façon à tomber de l'appareil 10.

De plus, un objet ayant une dimension transversale sensiblement plus grande que celle du support de données 18 ne peut pas être posé sur la surface de rétention 22. Les montants 26 empêchent en effet l'accès à la surface de rétention 22 pour un tel objet.

Selon une variante non représentée, la surface de rétention 22 est formée par au moins deux ergots qui s'étendent de manière perpendiculaire vers l'avant depuis la surface de communication 16. Les ergots sont alignés transversalement au bas de la surface de communication 16. Les ergots sont espacés transversalement d'une distance inférieure à la largeur transversale du support de données 18.

Un liquide qui coule depuis la surface de communication 16 n'est ainsi pas retenu par la surface de rétention 22. Le liquide est en effet évacué entre les ergots. De plus, une telle surface de rétention 22 empêche que des petits objets tels que des papiers chiffonnés ou autres ne soient posés dessus.

## Revendications

1. Appareil (10) comportant un boîtier dans lequel est logée une station de communication sans contact de type radiofréquence comportant une antenne (12) pour communiquer à distance par voie électromagnétique (E) avec un support de données (18), notamment en forme de carte, porté par un utilisateur, ledit boîtier présentant une zone de communication agencée à proximité de l'antenne (12) et perméable aux ondes électromagnétiques, l'utilisateur devant approcher le support de données (18) de la zone de communication (16) pour permettre la communication entre la station de communication et ledit support de données (18), la zone de communication présentant une surface de communication externe (16) inclinée par rapport à un plan horizontal, ladite surface de communication (16) coopérant avec des moyens (22) pour maintenir le support de données (18) contre la surface de communication (16), les moyens de maintien comportant une surface (22) inférieure transversale de rétention qui s'étend de manière globalement perpendiculaire depuis le bas de la surface de communication (16) vers l'avant de façon à empêcher le support de données (18) de glisser vers le bas, **caractérisé en ce que** la surface de rétention (22) comporte des moyens pour l'évacuation de liquides susceptibles de s'écouler depuis la surface de communication (16) jusqu'à la surface de rétention (22).

2. Appareil (10) selon la revendication précédente, **caractérisé en ce que** la surface de communication (16) coopère avec un rebord transversal (20) qui s'étend longitudinalement de manière perpendiculaire depuis la surface de communication (16), et dont la face supérieure (22) forme la surface inférieure de rétention.

3. Appareil (10) selon l'une quelconque des revendications précédentes, **caractérisé en ce que** la surface de communication (16) est légèrement inclinée par rapport à un plan vertical de façon que le support de données (18) soit maintenu plaqué par son poids (P) contre la surface de communication (16).

4. Appareil (10) selon l'une quelconque des revendications précédentes, **caractérisé en ce que** les moyens de maintien comportent deux montants (26) latéraux parallèles qui font saillie depuis la surface de communication (16), et qui s'étendent perpendiculairement depuis chacune des extrémités (28) de la surface de rétention (22) vers le haut, les montants (26) étant espacés d'une distance globalement égale à une dimension transversale du support de données (18) de manière à délimiter, avec la surface de rétention (22), un emplacement d'accueil destiné à recevoir le support de données (18), l'emplacement d'accueil englobant au moins une portion de la surface de communication (16).

5. Appareil (10) selon l'une quelconque des revendications précédentes, **caractérisé en ce qu'**il comporte des moyens (26) pour empêcher que des objets sensiblement plus volumineux que le support de données (18) ne soient posés sur la surface de rétention (22).

6. Appareil (18) selon la revendication 5 prise en combinaison avec la revendication 3, **caractérisé en ce que** l'angle d'inclinaison (a) de la surface de communication (16) par rapport à la direction verticale est inférieur à un angle limite de manière qu'un objet (32) dont le centre de gravité (G) est sensiblement décalé longitudinalement vers l'avant par rapport au centre de gravité (G) du support de données (18), bascule par rapport à la surface de rétention (22).

7. Appareil (10) selon l'une quelconque des revendications précédentes **caractérisé en ce que** la surface de rétention (22) comporte au moins à ses extrémités (28) des orifices d'évacuation de liquide.

8. Appareil (10) selon la revendication précédente, **caractérisé en ce que** la surface de rétention (22) comporte une déclivité transversale pour favoriser l'écoulement de liquide vers les orifices d'évacuation.

9. Appareil (10) selon l'une quelconque des revendications 1 à 16, **caractérisé en ce que** la surface de rétention (22) est formée par au moins deux ergots qui s'étendent de manière perpendiculaire vers l'avant depuis la surface de communication (16).

## Claims

1. Device (10) comprising a casing within which there is housed a contact-free communication station of the radiofrequency type comprising an antenna (12) for remote communication by electromagnetic means (E) with a data medium (18), particularly in the form of a card carried by a user, the said casing having a communication area permeable to electromagnetic waves located close to the antenna (12), the user having to bring the data medium (18) close to the communication area (16) in order to permit communication between the communication station and the said data medium, the communication area having an external communication surface (16) inclined with respect to a horizontal plane, the said communication surface (16) acting together with means (22) for holding the data medium (18) against the communication surface (16), the holding means comprising a lower transverse holding surface (22) which extends forwards generally perpendicularly from the base of the communication surface (16) in such a way as to prevent the data medium (18) from sliding downwards, **characterised in that** the holding surface (22) comprises means for the discharge of liquids which may run off the communication surface (16) onto the holding surface (22).

2. Device (10) according to the preceding claim, **characterised in that** the communication surface (16) acts together with a transverse ledge (20) which extends longitudinally perpendicularly from the communication surface (16) and whose upper surface (22) forms the lower holding surface.

3. Device (10) according to either of the preceding claims, **characterised in that** the communication surface (16) is slightly inclined with respect to a vertical plane so that the data medium (18) is held against the communication surface (16) by its weight (P).

4. Device (10) according to any one of the preceding claims, **characterised in that** the holding means comprise two lateral parallel uprights (26) which project from the communication surface (16) and extend perpendicularly upwards from each of the extremities (28) of the holding surface (22), the uprights (26) being spaced apart by a distance which is overall equal to a transverse dimension of the data medium (18) in such a way as to delimit together with the retention surface (22) a receiving location intended to receive the data medium (18), the receiving location incorporating at least a portion of the communication surface (16).

5. Device (10) according to any one of the preceding claims, **characterised in that** it comprises means (26) to prevent objects which are substantially more bulky than the data medium (18) from being placed on the holding surface (22).

6. Device (18) according to claim 5 taken in combination with claim 3, **characterised in that** the angle of inclination (a) of the communication surface (16) with respect to the vertical direction is less than a limiting angle so that an object (32) whose centre of gravity (G) is substantially offset longitudinally forwards in relation to the centre of gravity (G) of the data medium (18) will tip away from the holding surface (22).

7. Device (10) according to any one of the preceding claims **characterised in that** the holding surface (22) comprises openings for the discharge of liquid at least at its extremities (28).

8. Device (10) according to the preceding claim, **characterised in that** the holding surface (22) comprises a transverse gradient to encourage liquid to run off towards the discharge openings.

9. Device (10) according to any one of claims 1 to 6, **characterised in that** the holding surface (22) is formed of at least two projections which extend perpendicularly forward from the communication surface (16).

## Patentansprüche

1. Vorrichtung (10) mit einem Gehäuse, in dem eine kontaktlose Radiofrequenz-Kommunikationsstation angeordnet ist, die eine Antenne (12) aufweist, um über eine Entfernung auf elektromagnetischem Wege (E) mit einem von einem Anwender getragenen Datenträger (18), insbesondere in Form einer Karte, zu kommunizieren, wobei das Gehäuse eine Kommunikationszone darstellt, die in der Nähe der Antenne (12) eingerichtet ist und für elektromagnetische Wellen durchlässig ist, wobei der Anwender sich dem Datenträger (18) der Kommunikahonszone (16) nähern muss, um die Kommunikation zwischen der Kommunikationsstation und dem Datenträger (18) zu erlauben, wobei die Kommunikationszone eine äußere Kommunikationsoberfläche (16) bildet, die gegen eine horizontale Ebene geneigt ist, wobei die Kommunikationsoberfläche (16) mit Mitteln (22) zum Halten des Datenträgers (18) gegen die Kommunikationsoberfläche (16) zusammenwirkt, wobei die Haltemittel eine untere transversale Rückhalteoberfläche (22) aufweisen, die sich global senkrecht von dem unteren Ende der Kommunikationsoberfläche (16) nach vorne erstreckt, um ein Abgleiten des Datenträgers (18) nach unten zu verhindern, **dadurch gekennzeichnet, dass** die Rückhalteoberfläche (22) Mittel zum Abführen von Flüssigkeiten aufweist, die von der Kommunikationsoberfläche (16) bis zu der Rückhalteoberfläche abfließen können.

2. Vorrichtung (10) nach dem vorhergehenden Anspruch, **dadurch gekennzeichnet, dass** die Kommunikationsoberfläche (16) mit einer transversalen Randleiste (20) zusammenwirkt, die sich in ihrer Längsrichtung von der Kommunikationsoberfläche (16) senkrecht erstreckt und deren obere Fläche (22) die untere Rückhaltefläche bildet.

3. Vorrichtung (10) nach einem der vorhergehenden Ansprüche, **dadurch gekennzeichnet, dass** die Kommunikationsoberfläche (16) leicht gegen eine vertikale Ebene geneigt ist, sodass der Datenträger (18) durch sein Gewicht (P) am Platz gegen die Kommunikationsoberfläche (16) gehalten wird.

4. Vorrichtung nach einem der vorhergehenden Ansprüche, **dadurch gekennzeichnet, dass** die Haltemittel zwei seitliche zueinander parallele Stützflächen (26) aufweisen, die sich aus der Kommunikationsoberfläche (16) erheben und sich von jedem Ende (28) der Rückhalteoberfläche (22) senkrecht nach oben erstrecken, wobei die Stützflächen (26) global in einer Entfernung voneinander gelegen sind, die gleich einer transversalen Dimension des Datenträgers (18) ist, um mit der Rückhalteoberfläche (22) einen Aufnahmeplatz zur Aufnahme des Datenträgers (18) zu begrenzen, wobei der Aufnahmeplatz zumindest einen Teil der Kommunikationsoberfläche (16) umfasst.

5. Vorrichtung nach einem der vorhergehenden Ansprüche, **dadurch gekennzeichnet, dass** sie Mittel (26) aufweist, um zu verhindern, dass Objekte, die deutlich voluminöser als der Datenträger (18) sind, nicht auf die Rückhalteoberfläche aufgelegt werden können.

6. Vorrichtung nach Anspruch 5 in Kombination mit Anspruch 3, **dadurch gekennzeichnet, dass** der Neigungswinkel (a) der Kommunikationsoberfläche (16) in Bezug zu der vertikalen Richtung kleiner als ein Grenzwinkel ist, derart, dass ein Objekt (32), dessen Schwerpunkt (G) deutlich in Längsrichtung nach vorne in Bezug zu dem Schwerpunkt (G) des Datenträgers (18) verschoben ist, in Bezug zu der Rücklhalteoberfläche (22) wegkippt.

7. Vorrichtung (10) nach einem der vorhergehenden Ansprüche, **dadurch gekennzeichnet, dass** die Rückhalteoberfläche (22) zumindest an ihren äußeren Wänden (28) Öffnungen zum Abführen von Flüssigkeiten aufweist.

8. Vorrichtung nach dem vorhergehenden Anspruch, **dadurch gekennzeichnet, dass** die Rückhalteoberfläche (22) eine transversale Neigung aufweist, um das Abfließen von Flüssigkeit zu den Abführöffnungen zu begünstigen.

9. Vorrichtung nach einem der Ansprüche 1 bis 6, **dadurch gekennzeichnet, dass** die Rückhalteoberfläche (22) durch zumindest zwei Vorsprünge gebildet ist, die sich sich von der Kommunikationsoberfläche (16) senkrecht nach vorne erstrecken.
